# EUROPEAN PATENT APPLICATION

(11) **EP 4 703 597 A1**
(43) Date of publication of application: **04.03.2026**
(21) Application number: 24197989.7
(22) Date of filing: 02.09.2024
(51) Int. Cl.: F16B 37/14, F16B 33/00

(54) **CAP NUT, CAP NUT ARRANGEMENT AND USE**

(71) Applicant: Hitachi Energy Ltd, 8050 Zürich (CH)
(72) Inventor: Zweiacker, Kai, 8050 Zürich (CH); Steding, Guenter, 79807 Lottstetten (DE); Berger, Reto, 5417 Untersiggenthal (CH); Agostini, Francesco Siddharta Luigi, 8049 Zürich (CH)
(74) Representative: Michalski Hüttermann & Partner Patentanwälte mbB

(57) **Abstract**

A cap nut (1) comprising a metal body (2) with an opening (10) that has a thread (12) extending along an axial direction (X), the metal body (2) comprising
a gasket recess (20) that is annular; and/or
an edged portion (30) that is annular and forms an outermost section of the cap nut (1) along the axial direction (X).

## Description

### Technical Field

The invention relates to a cap nut, to a use and to a cap nut arrangement.

### Background Art

Cap nuts are widely used in various mechanical and industrial applications, e.g. to secure bolts and provide a protective covering for the bolt ends. These nuts are designed to prevent damage to the threads and protect against environmental factors such as moisture and dust. Traditional cap nuts often face challenges in maintaining structural integrity under varying conditions.

In existing solutions, cap nuts typically feature a metal body with a threaded opening to accommodate a threaded bolt or rod. However, these designs may encounter issues with their lifetime, especially in applications involving gas-insulated electrical switchgear or gas-insulated lines. Current cap nut designs are required to maintain a consistent and effective connection over extended periods. This is particularly crucial in environments where maintaining gas insulation is essential. Improving the cap nuts may enhance efficiency and reduce maintenance costs.

### Summary of invention

It is an object of the invention to provide solutions with respect to cap nuts particularly for gas-insulated electrical applications, like gas-insulated switchgear or gas-insulated lines, that provide increased rigidity and an enhanced lifetime. Particularly it is an object to avoid or reduce disadvantages of known solutions.

The object of the invention is solved by the features of the independent claims. Preferred implementations are detailed in the dependent claims, the description and the figures.

The object is particularly solved by a cap nut comprising a metal body with an opening that has a thread extending along an axial direction, and the metal body comprising
a gasket recess that is annular; and/or
an edged portion that is annular and forms an outermost section of the cap nut along the axial direction.

In other words, particularly, the object is solved by a threaded metal cap nut that has at least one of an annular groove configured for sealing and an annular protrusion, the annular protrusion, if present, protruding from the metal cap nut.

Upon development of the invention, it has been found that the cap nut can be enhanced by providing at least one integrated sealing solution. That helps to enhance lifetime in gas-insulated switchgears or lines.

Gas-insulated electrical applications typically contain insulating gas in the vicinity of parts carrying electricity. Such gas is, for example, kept in a closed volume or circuit inside the application. Over the time, for example due to material ageing and/or corrosion, leaks may occur which cause insulating gas to leave the application. Thus, it is of interest to keep the gas-insulated electrical applications sealed and to repair leaks. It is also of interest to provide an application that is more leak-proof. Here, the invention can be applied beneficially.

The invention provides an approach widely and flexibly applicable to gas-insulated electrical applications, whenever a section thereof leaks or could leak. The invention likely avoids a cost-intensive replacement of parts, gaskets or the like. The invention may be applicable all over the world outdoors and/or in different climate areas. Additionally, the invention can be applicable easily in outdoor environment.

The invention likely avoids that the gas-insulated electrical application needs to be disassembled or shut down, since it is particularly only or mostly worked on the application from outside of the application. Thus, no outage may be required upon applying the invention. Insulating gas does not need to be handled.

The invention has found that that a lot of gas-insulated electrical applications or utilities may face problems with gas leakages at some sections, especially at flanges, e.g. those comprised by gas-insulated switchgear (GIS) or gas-insulated lines (GUL) on their installed base. The invention provides flexible and easy approaches to seal those sections or flanges, wherein prior art solutions from third parties are quite expensive and not flexible enough when it comes to sealing different flange sizes. The invention provides a cost-effective outdoor-usable flange sealing solution which should be applicable for GIS/GIL flanges with different diameters, while in operation (without de-gassing and without opening the flange), that stops the gas leak and enables the same gas tightness as for new GIS.

The invention seeks to provide a cap nut that can be used in bolt connections where a leakage of fluid from the bolt connection should be reduced or eliminated. The invention provides a solution which can seal very effectively by way of optional cooperation of the edged portion and the gasket recess, optionally providing a redundant sealing solution. The term `bolt connection' typically relates to a mechanical connection involving at least a threaded rod or bolt and at least one of a nut or cap nut.

For example, the edged portion seeks to seal via a localized, annular plastic material deformation by penetration of a surface by means of the edged portion. For example, the gasket recess seeks to seal by contact in terms of area, e.g. involving a gasket, sealing means, or the like.

The invention beneficially provides a retrofit solution to enhance or even provide sealing in existing bolt connections by using the presently described cap nut as a replacement nut.

The cap nut provides an integrated sealing solution that helps to reduce egress and ingress of substances in bolt connections, e.g. water, insulating gas and the like. The cap nut can reduce likeliness of corrosion in bolt connections.

The above details, advantages and effects may be further improved by means of one or more of further preferred features as described herein.

Sealing particularly relates to closing paths or gaps for insulating gas. Sealing is typically conducted using material configured for sealing and/or blocking. Sealing particularly relates to making a component or the section gas-tight or fluid-tight. A leaking path - for example which can eventually come up in the region of a gasket when two rigid bodies like pipes are connected using said gasket - may be sealed by blocking the leaking path. Blocking may be conducted using an adhesive put onto and/or into the leaking path, and curing the adhesive. A problem using this simple approach to seal a leaking path can be that the pressure of the insulating gas may eventually lead to a leak again. Thus, a more sophisticated approach should be adopted for sealing the section, e.g. adopting the cap nut described herein.

The section of a gas-insulated electrical application typically relates to an area or a region thereof, particularly including a flange and/or flange connection. The section typically includes rigid parts or an assembly, particularly involving a gasket configured for sealing the section. The section has an outer face or surface, particularly a plurality thereof. The outer face may include a radial outer face, alternatively or additionally an axial outer face. The outer face typically faces outwardly and/or is arranged in contact to the environment and/or on an outside of the gas-insulated electrical application. The outer face may be at least sectionally ring-shaped, cylindrical, flat and/or convex. The section is meant to keep or guide on one side insulating gas and on the other side the outer face, rendering possible that the section can leak or can be leaky to be subject to sealing. Typically, the section includes at least one gap, path, hole, and/or contact face, especially providing a possible path for leakage of insulating gas. The at least one gap, path, hole, and/or contact face may be arranged between two or more outer faces.

The cap nut or cover nut typically seeks to provide a bolt connection while covering an end of the respective bolt or rod the cap nut is screwed onto. Thus, the cap nut may have on one axial side an opening with the respective thread and may have on the opposite axial side a closed portion. The thread may extend at least sectionally along an axial direction in the opening so that the cap nut can be screwed along the axial direction onto a threaded rod or bolt.

The cap nut may be configured to be screwed by means of a tool like a wrench, spanner, hexagon socket, ratchet, or the like. The cap nut comprises or consists of metal in that it has the metal body. The metal body may be shaped monolithically and/or in one piece. The metal body may form and/or comprise all features of the cap nut, particularly monolithically, e.g. the opening, thread, gasket recess, edged portion, and the like.

The metal body preferably is a solid part that comprises or consists of a metal alloy, e.g. steel, particularly stainless steel, e.g. chromium-nickel-steel (CrNi), like V2A or steel with material number 1.4301, 1.4541 or 1.4307, or chromium-nickel-molybdenum-steel (CrNiMo), like V4A or steel with material number 1.4401, 1.4571 or 1.4404. As an example for steel material number 1.4401, steel X5CrNiMo 17-12-2 may be named. Alternatively, the steel may have the material number 1.4306.

The opening may extend along one direction to be referred to as the axial direction. The opening may establish a center axis in the middle of the opening. The opening may be at least substantially and/or sectionally cylindrical in shape, e.g. formed as a threaded bore and/or blind hole. The opening may be at least substantially round. The opening may be surrounded by or arranged coaxially with respect to the gasket recess and/or the edged portion. The opening may be chamfered.

The cap nut has at least one or both of the gasket recess and the edged portion.

The gasket recess may be formed annular or circular. The gasket recess may include and/or be formed by a groove, e.g. for receiving an annular gasket, like an O-ring. The gasket recess may sectionally or partially exhibit a flat surface, e.g. extending in a plane particularly orthogonally to the axial direction for the purpose of sealing against another flat surface. The gasket recess may include a radially outwards surface and/or a radially inwards surface, particularly said surfaces arranged opposite one another and/or extending along the axial direction or in parallel thereto. The outwards surface may have a larger diameter than the inwards surface. The gasket recess may include a bottom, particularly between said surfaces. The outwards surface, the inwards surface, and/or the bottom may be formed annular, e.g. so that the groove is formed. A transition between one of said surfaces and the bottom may include an inner radius or rounding, for example the radius being equal to or up to 1 mm (e.g. R1), or equal to or up to 0.75 mm (e.g. R0.75), or equal to or up to 0.5 mm (e.g. R0.5), or equal to or up to 0.25 mm (e.g. R0.25), or less.

In a section in parallel to the axial direction, the gasket recess may be larger in terms of area than the edged portion. For example, the gasket recess may be assume an area that is at least two times or at least ten times or at least twenty times the area that the edged recess assumes.

The edged portion typically relates to a relatively sharp region or section of the cap nut. The edged portion may be in the form of an annular protrusion especially formed monolithically with the metal body. The edged portion may have an acute angle. The edged portion preferably having or being formed with an acute angle preferably includes that two surfaces of the edged portion are arranged at an angle between 0° and 90°, i.e. obliquely, not at a right angle and forming a substantially sharp edge. The two surfaces of the edged portion may be formed annular, wherein the acute angle can be seen in a section or cross-section in parallel to the axial direction. The edged portion is typically formed annular or circular in order to make a substantially annular or circular contact with a planar surface for sealing purposes.

The edged portion forming the outermost section of the cap nut along the axial direction particularly means that the cap nut can be placed onto a planar surface with the edged portion being the only point, area and/or line of contact thereto, particularly with the axial direction being oblique or perpendicular to said planar surface. This should assure that the edged portion makes the first contact to a surface to which surface the cap nut should bear against, wherein a large, focused force can be applied by means of the edged portion onto said surface so that a material deformation can be achieved for sealing purposes.

The gasket recess and/or the edged portion to comprise an annular shape preferably indicates the gasket recess and the edged portion to surround the opening and/or thread. The gasket recess and the edged portion may be arranged substantially coaxially with respect to the opening, e.g. so that the opening is centered with respect to the gasket recess and the edged portion.

The edged portion may have an acute angle. Particularly, the acute angle is between 0° and 90°. It may be provided that the acute angle is between 20° and 70°. Particularly, the acute angle is 45° ± 15°. The stability and deformability of the edged portion can be optimized by way of choosing the acute angle. This can affect how good the cap nut can seal against other metal surfaces. Additionally, a larger angle may be beneficial in that the cap nut is less prone to damages from collisions during transport or during assembly.

The edged portion may be particularly sharp at its tip or outermost section. The edged portion may have and/or may be formed with a rounding of up to 100 µm or up to 50 µm or up to 10 µm or 1 µm or 500 nm or 100 nm or 50 nm or less. The rounding or rounding off should provide a sharp, to some extent convex tip of the edged portion. Limiting the rounding numerically may provide a certain sharpness of the edged portion. The rounding may define a sharpness of the edged portion. The rounding may be considered as a medium or average rounding/radius of an edge. The rounding may extend over at least a section of an angle made up by the edged portion, e.g. with fadings or a larger rounding on one or both surfaces defining the edged portion. The rounding may extend in a section across a rounding angle that is in sum with the acute angle up to 180°, but typically less. For example, with the acute-angled edged portion having two surfaces obliquely arranged to one another, the rounding may start on one surface and ends on the other surface, wherein the rounding may form an average convex curve with a radius of up to 100 µm or less, as above. Such a rounding/curve/radius, particularly values of 100 µm or less, may support that the sealing functionality is enhanced in that the cap nut may seal against relatively rough surfaces.

The outermost section or tip, especially where the rounding is located, may be substantially ring-shaped and/or circular. The outermost section maybe arranged substantially within a plane. For example, the outermost section may be arranged between two parallel planes that exhibit a distance of up to 1 mm or up to 0.5 mm or up to 0.25 mm or up to 0.1 mm or less. This aims to provide good sealing function.

The edged portion may be substantially ring-shaped and/or circular. The edged portion may exhibit a height in the axial direction equal to or up to 1 mm or equal to or up to 0.75 mm or equal to or up to 0.5 mm or equal to or up to 0.3 mm or equal to or up to 0.2 mm or equal to or up to 0.1 mm or less. The height may be more than 0 mm and/or less than 1 mm. Particularly, the height may be 1 mm or 0.5 mm or less, i.e. less than 1 mm or less than 0.5 mm. The height may vary by ± 50 % or by ± 20 % or a different tolerance. The height of the edged portion may depend on the choice of the acute angle and/or the rounding. Such a height should be a good choice particularly in view of threads with a diameter or dimension of 10 mm or 12 mm or more, like M10, M12 or larger.

The edged portion may be arranged radially adjacent to the gasket recess, particularly radially directly adjacent to the gasket recess. For example, the edged portion may be arranged next to the gasket recess in a radial direction, e.g. with no distance and/or parts therebetween. The edged portion may be arranged radially outwards or inwards from the gasket recess. For example, the edged portion may surround the gasket recess, or vice versa. For example, a diameter or medium diameter formed by the gasket recess may be smaller or larger than a diameter or medium diameter formed by the edged portion. Thereby, the gasket recess and the edged portion can cooperate effectively while a compact construction is achieved.

The edged portion may be formed with a, preferably substantially cylindrical, first surface. The edged portion may be formed with a, preferably inclined or tapered, second surface. The second surface may be arranged radially outwards from the first surface, or alternatively inwards from the first surface. The first surface may extend from the gasket recess, particularly in a stepless manner. The first surface may form a part of the gasket recess and/or may extend from a surface of the gasket recess, e.g. the radially outwards surface or the radially inwards surface. The first and the second surfaces may transition via the outermost section or tip and/or the rounding. The first surface may extend substantially in parallel to the axial direction. The second surface may extend substantially oblique to the axial direction, particularly tapered towards a center axis of the cap nut. This assures a robust sealing, especially with respect to increased pressure inside the cap nut relative to an outside of the cap nut.

The cap nut may comprise at least one contact surface which may be annular, flat and/or may surround the opening. The at least one contact surface is typically arranged on one axial side of the cap nut which provides access to the thread, particularly with the at least one contact surface arranged substantially perpendicularly to an extension of the thread and/or to the axial direction.

The at least one contact surface may comprise a first contact surface arranged radially inwards from the gasket recess and/or the edged portion, particularly wherein the gasket recess may be in the form of an annular groove or recess. The at least one contact surface may comprise a second contact surface arranged radially outwards from the gasket recess and/or the edged portion. The second contact surface may be larger in diameter than the first contact surface. The gasket recess and/or the edged portion may be arranged radially between the first contact surface and the second contact surface. The first contact surface and the second contact surface may be arranged substantially in a common plane in order to apply pressure in said plane simultaneously when the cap nut is screwed on. The common plane may be perpendicular to the axial direction, e.g. so that the cap nut can apply a homogeneous pressure independent from a position about the axial direction. A radial width of the first contact surface may be smaller than a radial width of the second contact surface. The first contact surface may be smaller in terms of area than the second contact surface. In this way, an axially directed compression applied radially inside the gasket recess and/or edged portion may be smaller than an axially directed compression radially outside thereof. Also, compact design might be achieved. The at least one contact surface can substantially provide or replace a washer which would otherwise make sealing by means of the cap nut only more complex.

For example, the at least one contact surface, e.g. the first contact surface, may exhibit a radial width of at least 0.25 mm and/or up to 5 mm, or of at least 0.5 mm and/or up to 4 mm, or of at least 1 mm and/or up to 3 mm. For example, the at least one contact surface, e.g. the second contact surface, may exhibit a radial width of at least 1 mm and/or up to 10 mm, or of at least 2 mm and/or up to 8 mm, or of at least 3 mm and/or up to 6 mm.

The at least one contact surface, particularly the first contact surface and/or the second contact surface, may exhibit, particularly in total, a contact area of at least 100 mm² and/or up to 600 mm², particularly of at least 200 mm² and/or up to 400 mm². This provides a large and stable contact area which improves sealing and load distribution, particularly in view of threads with a diameter or dimension of 10 mm or 12 mm or more, like M10, M12 or larger.

The cap nut may comprise a tool engagement portion. The tool engagement portion may be configured for using a wrench, e.g. in order to rotate the cap nut about the axial direction. The tool engagement portion may be configured for a wrench size of 18 mm ± 5 mm or 24 mm ± 5 mm. The tool engagement portion may comprise a pair of parallel and opposite tool engagement surfaces, particularly three of said pairs distributed about the axial direction. The tool engagement portion may comprise a substantially hexagonal shape, e.g. in a top view along the axial direction, particularly realized by means of three of said pairs. This facilitates easy handling and installation with standard tools.

The cap nut may comprise an annular collar portion surrounding the opening, particularly the thread. The annular collar portion may be arranged at the side of the gasket recess. The annular collar portion may extend radially beyond the tool engagement portion. The annular collar portion may include and/or form the second contact surface. This may enhance the possible area of the second contact surface. Additionally, particularly, the cap nut thereby has an aesthetically appealing design.

The annular collar portion may comprise an outer diameter of at least 25 mm and/or up to 35 mm. The outer diameter may be 28 mm ± 2 mm or 32 mm ± 2 mm. The annular collar portion may comprise a first collar surface, for example a tapered and/or inclined surface. The annular collar portion may comprise a second collar surface, for example a substantially cylindrical and/or round surface, particularly the second collar surface defining an/the outer diameter of the cap nut. The annular collar portion may comprise the second contact surface, e.g. as a flat, annular, and/or frontal section. The second collar surface may be between the first collar surface and the second contact surface. The second surface may be substantially oblique or perpendicular to the first surface and/or to the second contact surface.

With respect to the first collar surface being tapered/inclined and the second collar surface being substantially cylindrical/round, an aesthetically pleasing and ergonomically beneficial design of the cap nut can be achieved. The aesthetics as well as ergonomics may be enhanced in that heights of the first and the second collar surfaces are substantially equal, e.g. different by ±40% or by ± 30% or by ± 20%. The heights may be considered along the axial direction. Also, the first and the second collar surfaces may form an obtuse angle. For example, the angle between the first and the second collar surfaces may be more than 90° and/or less than 180°, particularly at least 110° and/or up to 160°, or at least 140° and/or up to 160°, especially the angle being 150° ± 5°.

The second contact surface may extend in a radial direction, particularly starting from the gasket recess or the edged portion, towards, particularly up to, a side edge of the cap nut, e.g. of the annular collar portion. The side edge may be chamfered or rounded, e.g. in order to provide a transition between the second contact surface and the second collar surface. This may help in enhancing a sealing function of the cap nut by assuring that no burrs protrude from the side edge.

The thread or screw thread, known in the art typically in the form of a helical structure used to convert between rotational and linear movement or force, may be configured as an inner thread for application with a widely used design of bolts, e.g. as a metric or imperial thread and/or a single-start thread. For example, the thread may be configured as a metric thread like M10, M12, M14, M16, or M18. Particularly the thread may involve a thread pitch of 1 mm, 1.25 mm, 1.5 mm, 1.75 mm, 2 mm, or more. For example, the thread may be M12x1.75 or M16x2, respectively, with the value after the `x` indicating the thread pitch in mm. The thread may comprise a length in the axial direction of 11 mm ± 3 mm or 15 mm ± 4 mm or 25 mm ± 5 mm. The opening may comprise an unthreaded end section, e.g. with a length in the axial direction of 6 mm ± 3 mm. The length of the opening may be considered starting from the thread and in its cylindrical extending, e.g. without a typical tapered bottom which comes from drilling.

In order to assure rigidity and stability or the cap nut, the cap nut may comprise a wall thickness between an opening bottom and a top of the cap nut of at least 1 mm, particularly at least 3 mm or more. Said wall thickness may be considered along the axial direction. Said wall thickness may be a minimum thickness of metal material between the opening bottom and the top. Said wall thickness may also correspond to a minimum wall thickness of the metal body between the opening and an exterior to the opening to assure sealing capability.

The gasket recess may comprise a depth and/or a width. The depth may be considered in the axial direction. The width may be considered in the radial direction, i.e. may be a radial width. For example, the depth may be at least 1 mm and/or up to 10 mm, or at least 1.5 mm and/or up to 5 mm. The depth may be 1.8 mm ± 0.5 mm. The radial width may be at least 1 mm and/or up to 10 mm, or at least 2 mm and/or up to 5 mm. The radial width may be 3 mm ± 1 mm. The gasket recess may be substantially rectangular in a section of the cap nut along the axial direction. Such dimension may be beneficial particularly in view of threads with a diameter or dimension of 10 mm or 12 mm or more, like M10, M12 or larger.

The metal body may be made of an iron alloy, particularly steel, especially stainless steel or V2A steel or V4A steel. The metal body may be shaped as a monolithic part. The metal body may be coated, e.g. with a chromium alloy or the like. This ensures high durability and corrosion resistance with a low risk of leakage through the cap nut itself.

Alternatively or additionally, the cap nut, particularly the metal body, especially in case of steel, may be strain hardened or work hardened or cold formed. Strain hardening involves plastic deformation of material typically to enhance material's load-bearing capacity, e.g. hardness and/or strength. Strain hardening may be conducted substantially at room temperature or at elevated temperature, particularly below a recrystallization temperature of the respective material. Strain hardening can be automated at low cost in order to increase the durability of the material. Strain hardening can be scaled to employ desired material strength without making changes in material composition, e.g. by changing the degree of deformation of the respective material. Strain hardening may be conducted during machining of a blank for the cap nut, particularly wherein the blank may at least partially formed/deformed to assume a shape of the cap nut by means of the strain hardening. Whether or not the cap nut is strain hardened can be distinguished by evaluating mechanical properties or metallurgical properties of the cap nut. Methods known in the art can be employed. For example, the cap nut may have specific grain orientation in a cross section.

The object is further solved by a method to produce a cap nut or the cap nut, comprising the steps of
providing a metal body blank,
machining the metal body blank to provide the cap nut, especially a metal body of the cap nut, with an opening having a thread extending along an axial direction and with a gasket recess that is annular and/or with an edged portion that is annular and forms an outermost section of the metal body blank or the metal body along the axial direction,
wherein machining may include
   strain hardening of the metal body blank, and optionally
   at least one machining operation, including cutting, coating, separating and/or forming, to at least provide the opening, the gasket recess, the edged portion, a tool engagement portion, a coating, and/or an annular collar portion.

The metal body blank may be a piece of metal, e.g. in the form of a bar. The metal body black typically comprises or consists of the same material composition that the metal body has. The method may include separating a part from the metal body blank, especially when it is a bar; said part to be subject to the machining in order to provide the cap nut.

The step of machining typically relates to some or all measures or sub steps conducted to transform the metal body blank into the metal body, particularly into the cap nut. The strain hardening and/or the at least one machining operation may be understood as at least one of said measures or sub steps. Strain hardening may be conducted before, during, or after the at least one machining operation.

The object is further solved by a cap nut arrangement comprising a cap nut and a ring gasket configured to be arranged in the gasket recess of the cap nut, and particularly comprising a threaded metal rod whose thread corresponds to the cap nut or the metal body. The metal body and the threaded metal rod may comprise or consist of the same metal material and/or stainless steel, e.g. V2A or V4A and/or other materials as named herein. The cap nut arrangement, which might be referred to as a kit or system, may include two or more cap nuts, e.g. two cap nuts and two ring gaskets per threaded metal rod. This aims to ensure a complete and effective sealing solution for various applications.

The object is further solved by the use of a cap nut for a bolt connection of a gas-insulated electrical switchgear or a gas-insulated line. The bolt connection may include a threaded metal rod or a bolt, onto which threaded metal rod or bolt the cap nut(s) is/are screwed. The bolt connection may connect parts of the gas-insulated electrical switchgear or the gas-insulated line, e.g. flanges or lids or the like. The bolt connection may include a ring gasket to be inserted into the gasket recess. The cap nut may be used when the bolt connection is subject to be renewed, e.g. when a leak of the gas-insulated electrical switchgear or line is being sealed, e.g. when a leak has been identified. The ring gasket may comprise a polymer compound, e.g. an elastomer.

The term 'or' may be replaced by `and/or' throughout the present disclosure. As such, where 'or' is used, it is not necessarily meant that merely alternatives are named.

### Brief description of drawings

These and other aspects of the invention will be apparent from and elucidated with reference to the implementations described hereinafter.

In the drawings:
Fig. 1A-B shows a cap nut with an M16 thread having two different total lengths;
Fig. 2A-B shows a cap nut with an M12 thread having two different total lengths; and
Fig. 3A-E shows the cap nut of Fig. 1A in a top view (A), in a side view (B), in a cross section in parallel to an axial direction (C), in a detail (D) and in a further detail (E);
Fig. 4 shows a cap nut arrangement; and
Fig. 5 shows a part or section of a gas-insulated electrical application.

### Description of implementations

The description contains procedural or methodical aspects upon describing structural features of the invention; the structural features can be understood well in that way. It is emphasized to the reader that such structural features can be lifted from the described context without hesitation or the question of an intermediate generalization to form aspects of the invention. It is also emphasized to the reader that any the structural features described in the following can be understood as individual aspects of the invention to distinguish from known solutions, despite being possibly lifted from the context. The Figs. show schematic views, particularly not to scale.

Similar reference and names of features indicate that respective description can be considered to be valid across the embodiments.

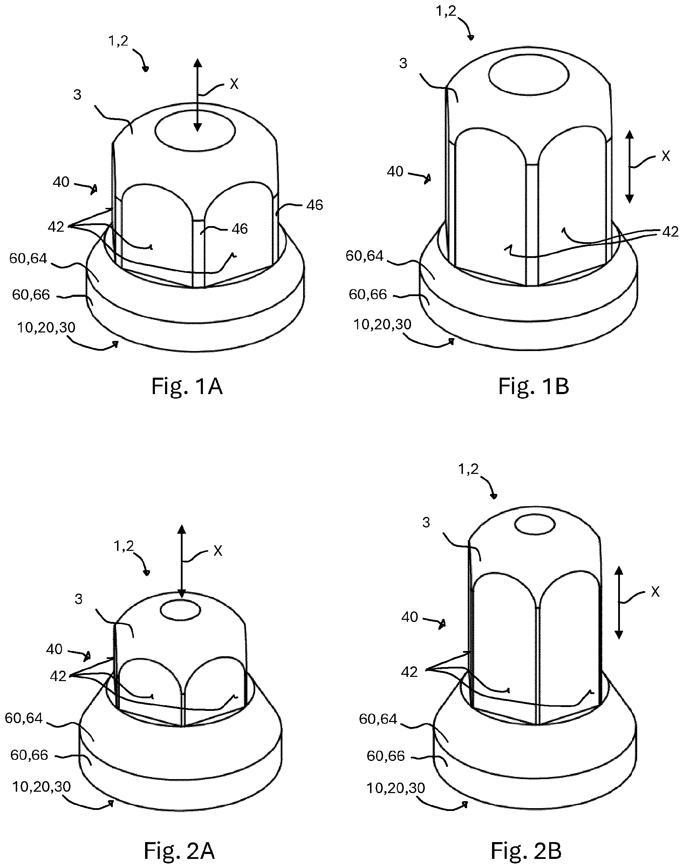

Each of Fig. 1A-B and Fig. 2A-B shows a cap nut 1 comprising a metal body 2 made of steel, e.g. V2A steel or V4A steel. The cap nut 1 has an opening 10, an annular gasket recess 20, and an annular edged portion 30.

The metal body 2 is shaped monolithically and/or in one piece.

Optionally, the metal body 2 is coated, e.g. chrome-plated or chromed.

The cap nuts 1 of Fig. 1A-B have an M16 thread and a tool engagement portion 40 of a substantially hexagonal shape that is configured for a wrench size of 24 mm. The cap nuts 1 of Fig. 2A-B have an M12 thread and a tool engagement portion 40 of a substantially hexagonal shape that is configured for a wrench size of 18 mm. The tool engagement portions 40 comprise three pairs of parallel and opposite tool engagement surfaces 42, said pairs distributed about an axial direction X.

Each cap nut 1 has an annular collar portion 60 extending radially beyond the tool engagement portion 40. The annular collar portion 60 has an inclined first collar surface 64 and a cylindrical second collar surface 66, particularly wherein the surfaces 64, 66 form an annular step or edge, particularly that is obtuse.

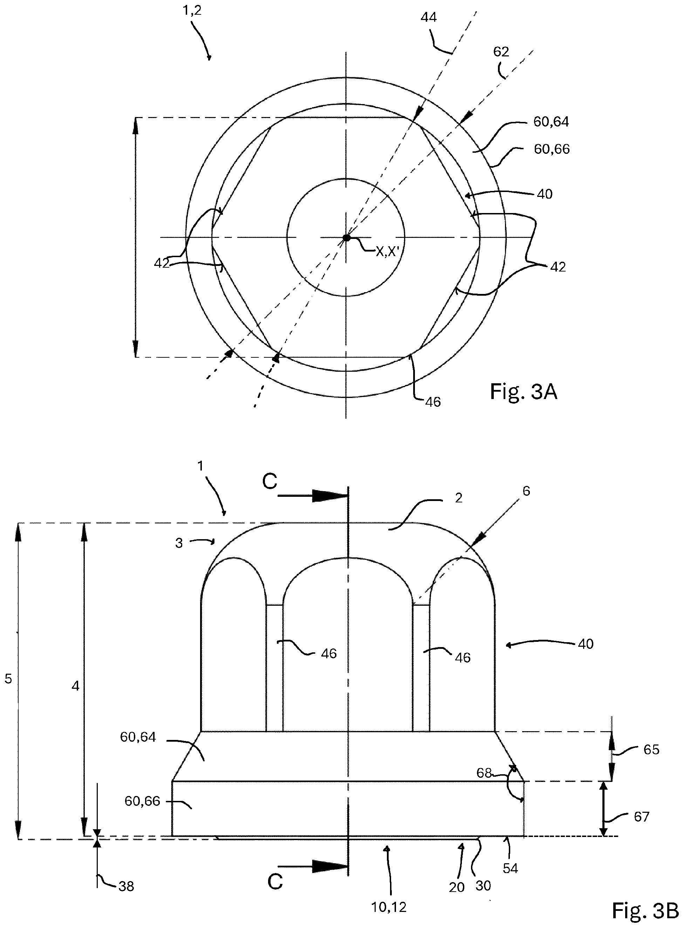

The annular collar portion 60 has an outer diameter of 32 mm ± 2 mm in Fig. 1A-B and of 28 mm ± 2 mm in Fig. 2A-B. The outer diameter is indicated at reference 62 in Fig. 3A. The cylindrical second collar surface 66 defines said outer diameter. Particularly, the annular collar portion 60 extends from the cap nut 1 radially and in a circumferential direction with respect to the axial direction X or the center axis X'. The annular collar portion 60 may form an outermost section of the cap nut 1 perpendicular to or radial to the axial direction or center axis X'.

The cap nuts 1 are convexly shaped in a top portion 3 about the axial direction X which enhances ergonomics and the optics of the cap nut 1. In the top portion 3, there may be a rounded annular portion 6, e.g. with a rounding of 8 mm ± 3 mm, for example approximately R7, R7.5 or R8. Said rounded annular portion 6 may transition substantially steplessly with the substantially circular flat surface, particularly improving looks and to some extent ergonomics. Said rounded annular portion 6 may transition involving a step with the tool engagement portion 40.

On top of the cap nuts 1 within the top portion 3, a substantially circular flat surface may be present as shown. The substantially circular flat surface may be arranged substantially perpendicular the axial direction X.

Fig. 3A-E substantially shows the cap nut 1 of Fig. 1A in different views.

With respect to Fig. 3A and Fig. 3B, the substantially hexagonal shape of the tool engagement portion 40 can be seen. The three pairs tool engagement surfaces 42 are arranged symmetrically and/or equidistantly about a center of the cap nut 1, e.g. a center axis X' extending along or in parallel to the axial direction X. A transition between two adjacent tool engagement surfaces 42 includes a round or convex transition surface 46 corresponding to an outer diameter 44 of the cap nut 1 and extending between the collar portion 40 and the top portion 3. Here, six transition surfaces 46 are provided.

The outer diameter 44 may be 27 mm ± 3 mm or 21 mm ± 3 mm, , e.g. with a diameter 44 to be considered for smaller threads 12.

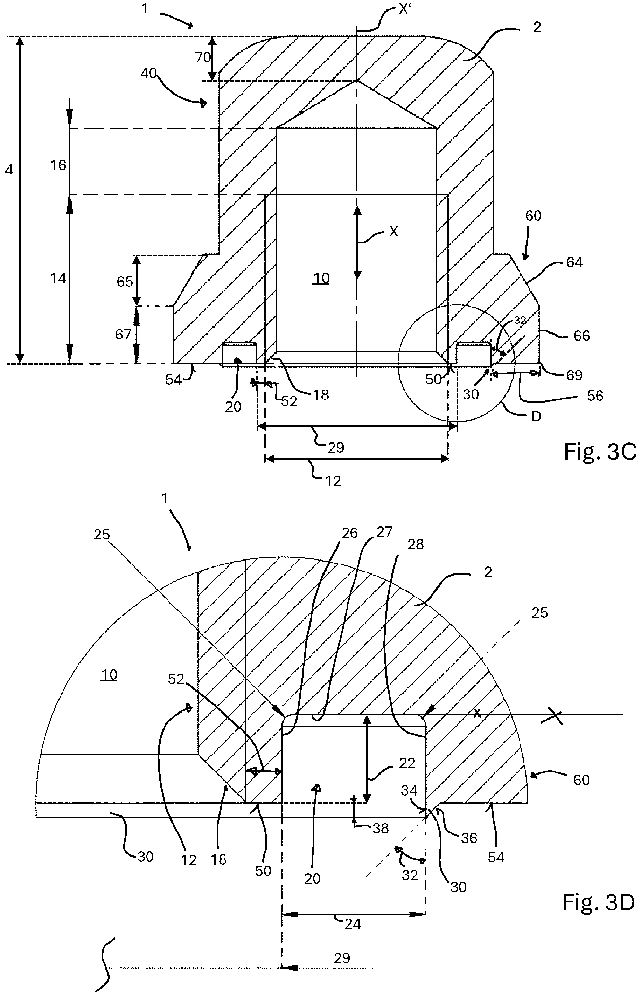

With respect to Fig. 3B and Fig. 3C, the cap nut 1 has in the opening 10 the metric M16 thread 12 which extends along the axial direction X and surrounds the center axis X'.

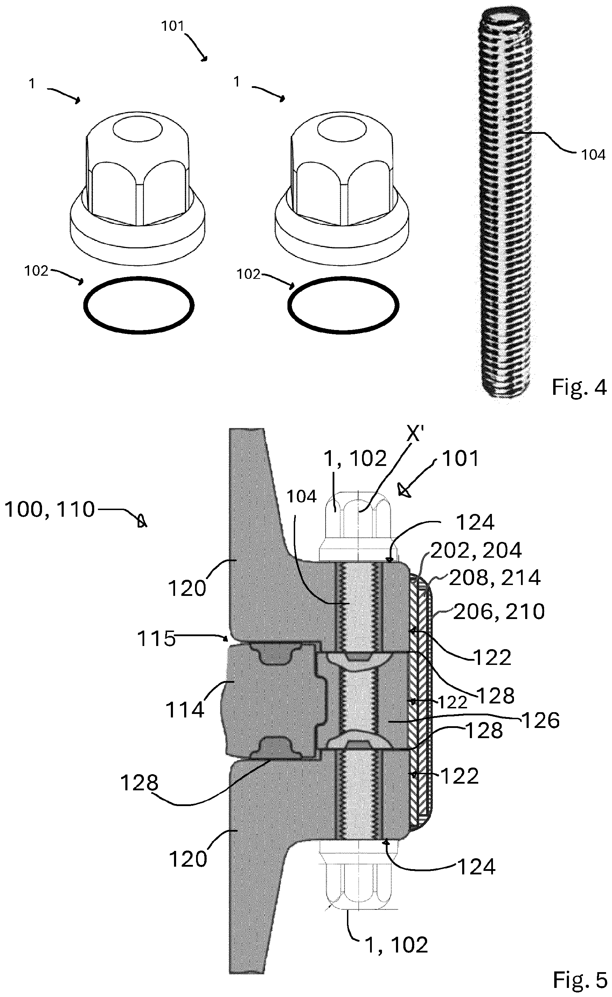

The cap nut 1 can be screwed about the center axis X' in order to be attached to a threaded metal rod or bolt, e.g. in order to form a bolt connection or the like, cf. Fig. 5.

The opening 10 is chamfered or has an annular chamfer 18 which may facilitate insertion of the threaded metal rod or bolt.

The annular collar portion 60 surrounds the thread 12. In order to provide a nice look and to possibly provide some improved ergonomics of the cap nut 1, the first collar surface 64 is inclined relative to the second collar surface 66, particularly inclined by to form an angle 68 that is 150° ± 20° and thereby substantially obtuse.

The first collar surface 64 has a height 65 along the axial direction X of approximately 4.5 ± 1.5 mm or 6.5 ± 1.5 mm, e.g. with a higher height 65 to be considered for smaller threads 12 in order to make up for the smaller tool engagement portion 40. The second collar surface 64 has a height 67 along the axial direction X of approximately 5 mm ± 1.5 mm. The heights 65, 67 are different by a maximum of ± 40%.

With respect to Fig. 3B and Fig. 3C, particularly including the thread 12 to be an M16 metric thread, the cap nut 1 has a total length 5 along the axial direction X of 29 mm ± 4 mm or 38 mm ± 5 mm, depending on the application. Alternatively, particularly in case the thread 12 is smaller than M16 or 16 mm, for example is an M12 thread, the cap nut 1 may have a total length 5 along the axial direction X of 25 mm ± 4 mm or 38 mm ± 5 mm, depending on the application. A respective net length 4 along the axial direction X is reduced by the height 38 of the edged portion 30, for example by 0.5 mm or 0.3 mm.

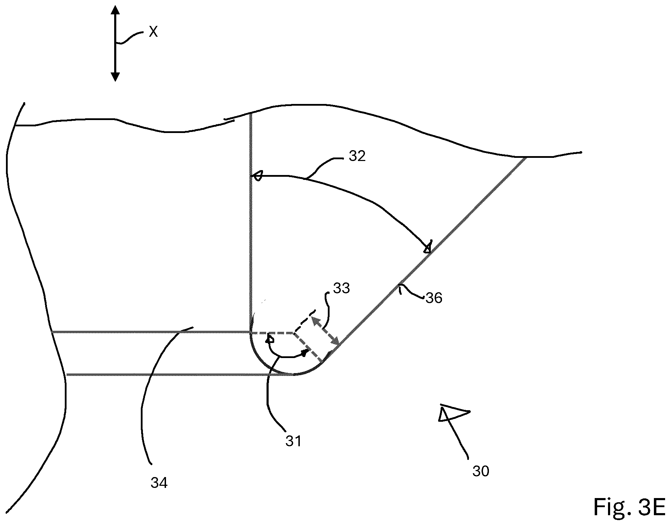

With respect to Fig. 3B, Fig. 3C and Fig. 3E, it can be seen that the edged portion 30 is formed annular and forms an outermost section or tip of the cap nut 1 along the axial direction X and particularly opposite the top portion 3 along the axial direction X.

With particular reference to Fig. 3E, substantially showing just the outermost section or tip, the edged portion 30 has and/or forms an acute angle 32 that is 45° ± 15°. The edged portion 30 has and/or forms a rounding of 50 µm or less, e.g. an average rounding being between 0 and 50 µm. The rounding can be measured as a radius 33. The rounding extends across a rounding angle 31 that is 180° minus the acute angle 32, i.e. 180° - 45°±15° = 135° ± 15°. The rounding, particularly the rounding angle 31, extends from a cylindrical first surface 34 and tapered second surface 36. Here, the rounding is arranged at the outermost section or tip of the cap nut 1 and follows the annular shape of the edged portion 30.

The edged portion 30 has a height in the axial direction X of 1 mm or less, e.g. the height 38 being 0.5 mm ± 0.3 mm or 0.3 mm ± 0.1 mm.

The gasket recess 20 and the edged portion 30 at least substantially surround the opening 10, especially the thread 12, and/or an entry section in front of the thread 12.

The edged portion 30 is arranged radially directly adjacent to the gasket recess 20 and is arranged radially outwards from the gasket recess 30, cf. particularly Fig. 3D.

The edged portion 30 is formed with a substantially cylindrical first surface 34 and with a tapered second surface 36. The second surface 36 is arranged radially outwards and/or facing away from the first surface 34. The first surface 34 extends from the gasket recess 20, particularly a radially outwards surface 28 of the gasket recess 20.

The gasket recess 20 has the radially outwards surface 28, a bottom 27, and a radially inwards surface 26. Said surfaces 26, 28 are arranged opposite one another. A transition between said surfaces 26, 28 and the bottom 27 has an inner radius of 0.25 mm or R0.25 thereby forming a rounding at ref. 25. Here, the rounding 25 is annular.

The gasket recess 20 particularly includes or is formed by an annular groove or recess.

The gasket recess 20 has a depth 22 in the axial direction X of 1.8 mm ± 0.5 mm and/or a width 24 of 3 mm ± 1 mm. The depth 22 is measured from at least one contact surface 50, 54 of the cap nut 1 towards the bottom 27 along the axial direction X. The width 24 is measured in a radial direction relative to the axial direction X.

The radially inwards surface 26 is formed with a diameter 29 of 18 mm ± 3 mm or of 14 mm ± 3 mm particularly about the center axis X', e.g. with a smaller diameter 29 to be considered for smaller threads 12.

The cap nut has at least one contact surface 50, 54 which is, annular, flat and surrounds the opening 10. The at least one contact surface 50, 54 comprises a first contact surface 50 arranged radially inwards from the gasket recess 20 and a second contact surface 54 arranged radially outwards from the edged portion 30. The first contact surface 50 and the second contact surface 54 are arranged to extend in a common plane that is perpendicular to the axial direction X. The annular collar portion 60 includes the at least one contact surface 50, 54, particularly at least the second contact surface 54.

The second contact surface 54 extends in a radial direction starting from the edged portion 30 towards and up to a side edge 69 of the cap nut 1, particularly of the annular collar portion 60. The side edge 69 is chamfered or rounded. The side edge 69 is arranged in a perpendicular transition between the second collar surface 66 and the second contact surface 54.

The first contact surface 50 and the second contact surface 54 exhibit in total a contact area of at least 200 mm² and/or up to 400 mm². For example, M16 threads may require a larger contact area than smaller threads, like M12. The contact area may be, for example in case of an M16 thread, 350 mm² ± 50 mm². The contact area may be, for example in case of an M12 thread or a thread smaller than M16, 250 mm² ± 50 mm².

A radial width 52 of the first contact surface 50 is smaller than a radial width 56 of the second contact surface 54. The first contact surface 50 is smaller in terms of area than the second contact surface 54, e.g. by at least 50 %.

With respect to Fig. 3C, the thread 12 may comprise a length 14 in the axial direction X of 11 mm ± 3 mm or 15 mm ± 4 mm or 25 mm ± 5 mm, depending on the application. The opening 10 typically comprises an unthreaded end section with a length 16 in the axial direction X of 6 mm ± 3 mm.

The cap nut comprises a wall thickness 70 between an opening bottom and a top of the cap nut 1, e.g. the said substantially circular flat surface, of at least 1 mm, particularly at least 3 mm or more. Here, the opening bottom is tapered, e.g. since it is made by drilling.

Fig. 4 shows a cap nut arrangement 101 comprising at least two cap nuts 1, at least two gaskets 102 in the form of ring gasket s, and at least one threaded metal rod 104, particularly one rod 104 for each pair of cap nuts 1. The cap nuts 1 may comprise a metric thread, e.g. an M12 or M16 thread.

The gasket 102 is configured to be arranged in a gasket recess of a respective cap nut 1, e.g. may correspond in diameter to the gasket recess and may protrude axially from the gasket recess when in an uncompressed state.

A thread of the threaded metal rod 104 corresponds to a respective pair of cap nuts 1, e.g. is an M12 or M16 metric thread.

Fig. 5 shows a part or section 110 of a gas-insulated electrical application 100. The application 100 is, for example, configured as a gas-insulated switchgear or a gas-insulated line. The section 110 includes a flange connection with two mating flanges 120. The section 110 may optionally or alternatively include a flange 120 closed with a lid.

The application 100 has the two flanges 120 (or one flange closed with a lid in a similar manner) and includes a ring gasket 114 in an annular gasket recess 115, the gasket recess 115 being in the form of a groove or a recess, and an annular spacer 126. The ring gasket 114 seals against both flanges 120. A bolt connection in the form of a threaded metal rod 104 and two cap nuts 101 serves for a mechanical connection within the section 110. There may be a plurality of bolt connections for one section 110.

The bolt connection as shown in Fig. 5 may be established using the arrangement 101 as described herein.

For example, the arrangement 101 can mounted or applied to the application 100 to replace a former bolt connection, e.g. for sealing or re-sealing the application 100, especially in case of a leak.

A path may be present, e.g. between contact faces 128 of the section 110, e.g. between the ring gasket 114 and a flange 120 or between the spacer 126 and a flange 120, rendering, particularly in case of failure of the ring gasket 114, the possibility for insulating gas to leak to the outside. Said path may lead from an inside also up to the bolt connection and a respective cap nut 1 screwed onto a bolt or threaded metal rod 104.

In order to seal the application 100, the cap nut 1 is provided with a gasket 102 and an edged portion as described with respect to other implementations. The gasket 102 and the edged portion can seal against axial outer faces 124 that face away from one another, while the rod 104 is under tension, particularly assuring that the cap nuts 1 are pressed against the axial outer faces 124. Particularly, the annular collar portion and contact surfaces of the cap nuts 1 face towards the respective axial outer faces 124 and are in contact therewith.

In order to enhance sealing of the gas-insulated electrical application 100, particularly said path, the application 100 and particularly the section 110 may further be provided on outer faces 122 thereof with an adhesive 202 applied to the outer faces 122. The outer faces 122 may substantially face in a radially outside direction with respect to the section 110.

Optionally, as shown, a flexible flat material 204 can be arranged on the outer faces 122 which may form a composite material with the adhesive 202, further enhancing sealing.

Optionally, the application 100 may comprise alternating and/or stacked layers of adhesive 202 and flexible flat material 204, further enhancing sealing.

Optionally, the application 100 may have a foil 6 arranged on the outer faces 122, e.g. directly or indirectly, particularly wherein the flexible flat material 204 has or is a molding prepreg. The foil 6 may be arranged atop the flexible flat material 204, e.g. directly (preferably where ref. 208 or 214 are in Fig. 5) or indirectly (preferably where ref. 210 and 206 are in Fig. 5).

Optionally, the application 100 may have an infusion mesh 208 and/or molding material 214, particularly the molding material 214 forming a further composite material with the infusion mesh 208. A vacuum foil 210 may be arranged on the outer faces 122.

The flexible flat material 204 may have or may be a fiber material. The vacuum foil 210 can be arranged atop infusion mesh 208, e.g. as shown in Fig. 5. The infusion mesh 208 can be arranged atop the flexible flat material 204, e.g. as shown in Fig. 5.

The flexible flat material 204 typically relates to a sheet material, band material, tape material and/or mat material. The flexible flat material 204 typically is or can be infused, covered, permeated, bonded and/or coated with the adhesive. In one embodiment, the flexible flat material 204 is covered and/or permeated by the adhesive, especially already before the step of arranging. The flexible flat material 204 may comprise or consist of pre-impregnated fibers, i.e. a prepreg, to be bonded and/or permeated by the adhesive. The prepreg may comprise fibers in a polymer matrix. The prepreg may be a polyester epoxy prepreg. The flexible flat material 204 or any other material named herein may comprise or consist of a fiber and/or fabric material, e.g. glass, carbon, aramid, silicone, polymer, e.g. polyester, or basalt fibers, particularly to be bonded and/or permeated by the adhesive.

The adhesive 202 preferably relates to an at least partially fluid, liquid, solid and/or pasty material. The adhesive 202 may comprise or consist of a polymer compound particularly configured for providing adhesion. The adhesive 202 particularly comprises at least one organic compound. The adhesive 202 may comprise or consist of an elastomer, thermoplastic, emulsion, and/or thermoset. Examples of adhesives 202 are: epoxy, polyurethane, PMMA, cyanoacrylate and acrylic polymers. Particularly, the adhesive 202 may be a two-component (2K) or multicomponent adhesive 202, e.g. including one or more polymer compounds and/or with an epoxy resin base. Particularly, the adhesive 202 may be a hardener mixed or configured to be mixed with the one or more polymer compound. Mixing may be conducted during handling the adhesive 202, e.g. applying and/or injecting. The adhesive 202 and the molding material 214 may be substantially similar or identical, e.g. in mechanical and/or chemical properties.

The molding material 214 may comprise a polymer compound, for example an epoxy resin, and optionally a hardener mixed with the polymer compound. The molding material 214 may correspond to the adhesive 202, i.e. comprise at least one similar or equal component or may be the same. The molding material 214 and/or the adhesive 202 may comprise or be a vulcanizing rubber. The infusion mesh 208 may improve flow of the molding material 214, e.g. under vacuum to distribute substantially evenly across the outer faces 122.

Shown and described is a use of a cap nut arrangement 101 or cap nut 1 for a bolt connection of a gas-insulated electrical switchgear or a gas-insulated line.

Optionally, a kit may comprise the cap nut 1, particularly the cap nut arrangement 101, and further may comprise an/the adhesive 202, an/the flexible flat material 204, an/the foil 6, an/the infusion mesh 208, an/the vacuum foil 210, and/or an/the molding material 214. The kit may be configured for sealing or re-sealing of a gas-insulated electrical application, such as a gas-insulated electrical switchgear or a gas-insulated line.

Particularly, especially in case of an M12 thread, one or more of the following features may be realized with respect to the cap nut 1. The tool engagement portion 40 may be configured for a wrench size of 18 mm ± 2 mm. The cap nut 1 may have an outer diameter 62 of 28 mm ± 2 mm. A respective gasket for the gasket recess 20 may be an O-Ring gasket, e.g. 13 mm ± 2 mm in ring diameter and/or 2.5 mm ± 1 mm in cross sectional diameter. The cap nut 1, especially the opening 10 and the thread 12, may be configured for engaging with a threaded metal rod along the axial direction X by a length of at least 11 mm or more.

Particularly, especially in case of an M16 thread, one or more of the following features may be realized with respect to the cap nut 1. The tool engagement portion 40 may be configured for a wrench size of 24 mm ± 2 mm. The cap nut 1 may have an outer diameter 62 of 32 mm ± 2 mm. A respective gasket for the gasket recess 20 may be an O-Ring gasket, e.g. 17 mm ± 2 mm in ring diameter and/or 2.5 mm ± 1 mm in cross sectional diameter. The cap nut 1, especially the opening 10 and the thread 12, may be configured for engaging with a threaded metal rod along the axial direction X by a length of at least 14 mm or more.

Shown and disclosed is a cap nut 1 that is strain hardened or work hardened or cold formed. Strain hardening has been conducted during machining of a blank for the cap nut 1, wherein the blank was at least partially deformed to assume a shape of the cap nut 1 by means of the strain hardening.

The cap nuts 1 shown can be produced by a method. The method comprises providing a metal body blank and machining the metal body blank to provide a cap nut 1 or a metal body 2 thereof. The step of machining includes strain hardening of the metal body blank and machining operations. The machining operations include cutting, coating, separating and/or forming, to at least provide the opening 10, the gasket recess 20, the edged portion 30, the tool engagement portion 40, the coating, and/or the annular collar portion 60. Strain hardening may be conducted before cutting or forming the thread and/or the opening 10.

### Reference signs list

- 1: cap nut
- 2: metal body
- 3: top portion
- 4: net length
- 5: total length
- 6: rounded annular portion
- 10: opening
- 12: thread
- 14: length
- 16: length
- 18: chamfer
- 20: gasket recess
- 22: depth
- 24: width
- 25: rounding
- 26: surface
- 27: bottom
- 28: surface
- 29: inner diameter
- 30: edged portion
- 31: rounding angle
- 32: acute angle
- 33: radius
- 34: first surface
- 36: second surface
- 38: height
- 40: tool engagement portion
- 42: tool engagement surface
- 44: outer diameter
- 46: transition surface
- 50: first contact surface
- 52: radial width
- 54: second contact surface
- 56: radial width
- 60: annular collar portion
- 62: outer diameter
- 64: first collar surface
- 65: height
- 66: second collar surface
- 67: height
- 68: angle
- 69: side edge
- 70: wall thickness
- 100: application
- 101: arrangement
- 102: gasket
- 104: threaded metal rod
- 114: ring gasket
- 115: annular gasket recess
- 120: flange
- 122: outer face
- 124: outer face
- 126: spacer
- 128: contact face
- X: axial direction
- X': center axis

## Claims

1. Cap nut (1) comprising a metal body (2) with an opening (10) that has a thread (12) extending along an axial direction (X), the metal body (2) comprising
a gasket recess (20) that is annular; and/or
an edged portion (30) that is annular and forms an outermost section of the cap nut (1) along the axial direction (X).

2. Cap nut (1) according to the preceding claim, wherein
the edged portion (30) has an acute angle (32) that is between 20° and 70° or is 45° ± 15°, and/or
the edged portion (30) is formed with a rounding of 50 µm or less.

3. Cap nut (1) according to one of the preceding claims, wherein
the edged portion (30) has a height (38) in the axial direction (X) of 1 mm or 0.5 mm or less.

4. Cap nut (1) according to one of the preceding claims, wherein
the edged portion (30) is arranged radially directly adjacent to the gasket recess (20) and/or is arranged radially outwards from the gasket recess (20).

5. Cap nut (1) according to one of the preceding claims, wherein
the edged portion (30) is formed with a substantially cylindrical first surface (34) and with a tapered second surface (36), the second surface (36) arranged radially outwards from the first surface (34), particularly the first surface (34) extending from the gasket recess (20).

6. Cap nut (1) according to one of the preceding claims, comprising at least one contact surface (50, 54) which is, annular, flat and surrounds the opening (10), the at least one contact surface (50, 54) comprising
a first contact surface (50) arranged radially inwards from the gasket recess (20), and/or
a second contact surface (54) arranged radially outwards from the edged portion (30).

7. Cap nut (1) according to the preceding claim, wherein
the first (50) and the second (54) contact surface are arranged to substantially extend in a common plane that is perpendicular to the axial direction (X), and/or
the first (50) and the second (54) contact surface exhibit in total a contact area of at least 200 mm² and/or up to 400 mm²

8. Cap nut (1) according to one of the preceding claims, comprising
a tool engagement portion (40) configured for a wrench size of 18 mm ± 2 mm or 24 mm ± 2 mm, the tool engagement portion (40) particularly comprising a substantially hexagonal shape.

9. Cap nut (1) according to one of the preceding four claims, comprising
an annular collar portion (60) surrounding the thread (12), extending radially beyond the tool engagement portion (40) and including the second contact surface (54).

10. Cap nut (1) according to the preceding claim, the annular collar portion (60) comprising an outer diameter (62) of at least 25 mm and up to 35 mm, particularly the outer diameter (62) being 28 mm ± 2 mm or 32 mm ± 2 mm.

11. Cap nut (1) according to one of the preceding claims,
the thread (12) configured as a metric M12 or metric M16 thread and/or comprising a length (14) in the axial direction (X) of 11 mm ± 3 mm or 15 mm ± 4 mm or 25 mm ± 5 mm, and, particularly,
the opening (10) comprising an unthreaded end section with a length (16) in the axial direction (X) of 6 mm ± 3 mm

12. Cap nut (1) according to one of the preceding claims, the gasket recess (20) comprising a depth (22) in the axial direction (X) of 1.8 mm ± 0.5 mm and/or a width (24) of 3 mm ± 1 mm.

13. Cap nut (1) according to one of the preceding claims, wherein
the metal body (2) is made of steel, particularly V2A steel or V4A steel, and optionally
the metal body (2) is strain hardened.

14. Cap nut arrangement comprising a cap nut (1) according to one of claims 1 to 13 and a ring gasket configured to be arranged in the gasket recess (20) of the cap nut (1), and particularly comprising a threaded metal rod whose thread corresponds to the cap nut (1), particularly the metal body (2) and the threaded metal rod comprising the same metal material and/or stainless steel.

15. Use of a cap nut arrangement according to claim 14 or a cap nut (1) according to one of claims 1 to 13 for a bolt connection of a gas-insulated electrical switchgear or a gas-insulated line.
